**Europäisches Patentamt**

**European Patent Office**

**Office européen des brevets**

(19)

(11) Publication number: **0 034 438**

**A1**

(12) # EUROPEAN PATENT APPLICATION

(21) Application number: **81300453.8**

(22) Date of filing: **03.02.81**

(51) Int. Cl.³: **B 01 L 3/02**

(30) Priority: **15.02.80 FI 800463**

(43) Date of publication of application:
**26.08.81 Bulletin 81/34**

(84) Designated Contracting States:
**AT BE CH DE FR GB IT LI LU NL SE**

(71) Applicant: **LABSYSTEMS OY**
**Pulttitie 9**
**SF-00810 Helsinki 81(FI)**

(72) Inventor: **Ekholm, Pertti**
**Sammatintie 16 L 130**
**SF-00550 Helsinki 55(FI)**

(74) Representative: **Tillbrook, Christopher John**
**c/o Reginald W. Barker & Co. 13, Charterhouse Square**
**London EC1M 6BA(GB)**

(54) **Tip vessel element.**

(57) The subject of the present invention is a tip vessel element (1) used in connection with liquid transfer devices. The tip vessel (2) in the tip vessel element (1) or the tip vessels (2), which are parallel to each other, e.g., in a row or matrix form, in the tip vessel element (1) are supported by a support and fastening plate (3). The tip vessel or tip vessels (2) and the support and fastening plate (3) are made as one piece preferably out of a plastics material by extrusion. According to the invention on the inside face of the wall (4) of each tip vessel of the tip vessel element (1) there is, facing towards the interior of the tip vessel (2), at least one such annular projection, flange or bulging (5), projecting from the said wall face and made of one piece with the tip vessel element (1), as, when the tip vessel element (1) is attached to the liquid transfer device, forms a sealing point around the piston (6) jointly operative with the tip vessel (2) concerned. At least a space required by the stroke length of the piston remains in each tip vessel (2) underneath the sealing point.

*Fig.1.*

Tip Vessel Element

The subject of the present invention is a tip vessel element for use in connection with liquid transfer devices, the tip vessel in the tip vessel element or the tip vessels, which are parallel to each other, e.g., in a row or matrix form, in the tip vessel element being supported by a support and fastening plate and the tip vessel or tip vessels and the support and fastening plate being made as one piece preferably out of a plastics material by extrusion.

To the single-channel liquid transfer devices on the market a tip is attached which operates as the liquid vessel. Then the tip itself is very simple, but the liquid transfer device to which the tip is attached is complicated, and therefore the devices are expensive. Operations of dosage by means of these devices and tips do not meet the increasing requirements in respect of precision and reproducibility especially when small quantities of samples and reagents are transferred and dosed.

The object of the present invention is to eliminate some of the above drawbacks, and the tip vessel element in accordance with the present invention is mainly characterized in that on the inside face of the wall of each tip vessel of the tip vessel element there is, facing towards the interior of the tip vessel, at least one such annular projection, flange or bulging, projecting from the said wall face and made of one piece with the tip vessel element, as, when the tip vessel element is attached to the liquid transfer device, forms a sealing point around the piston jointly operative with the tip vessel concerned and that at least a space required by the stroke length of the piston remains in each tip vessel underneath the sealing point.

The tip vessel elements in accordance with the present invention are, together with the liquid transfer devices, elastic and rapid to use. Moreover, in certain applications the working safety is improved considerably, because after use the tips can be handled by just grasping the support in stead of the tips. As the support also functions as the unit of connection to the liquid transfer device, no component of the device itself can be contaminated.

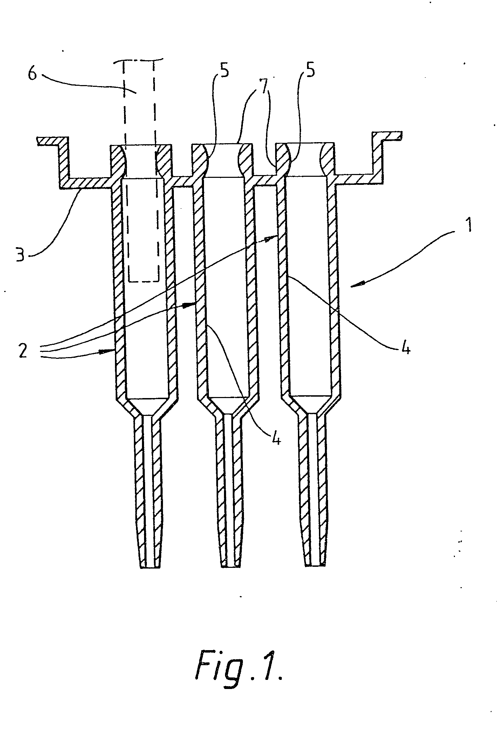

The invention comes out more closely from the following description and from the attached drawing, wherein the tip vessel element in accordance with the invention is shown as a side view and in section.

The tip vessels 2 of the tip vessel element 1 are placed, e.g., in the shape of a 3 x 3 matrix, whereby the said tip vessel element 1 is supposed to be connected by means of its support and fastening plate 3 to a nine-channel liquid transfer device. On the inside face of the wall 4 of each tip vessel 2 of the tip vessel element 1 there is, facing towards the interior of the tip vessel 2 at least one annular projection, flange or bulging 5, projecting from the said wall face 4 and, when the tip vessel element 1 is attached to the liquid transfer device, forming the sealing point around the piston 6 jointly operative with the tip vessel 2 concerned. It is an essential feature of the tip vessel element 1 in accordance with the invention that the entire element, i.e. the support and fastening plate 3, the tip vessels 2, and the sealing points 5, is made of one piece, whereby, e.g., no separate sealing means is required. The sealing point 5 must be placed in the tip vessel 2 so that in each tip vessel at least the space required by the stroke length of the piston 6 remains underneath the sealing point 5. Thus, according to the exemplifying embodiment shown in the drawing, the sealing point 5 may be placed in each tip vessel 2 right in the upper part of the tip vessel 2. In order to increase the elasticity of the sealing point 5, the upper part 7 of each tip vessel 2 extends preferably the length required by the sealing point 5 above the upper face of the support and fastening plate 3.

The tip vessel element 1 is made as one piece, for example, out of plastics material by extrusion.

0034438

WHAT IS CLAIMED IS:

1. A tip vessel element (1) for use in connecation with liquid transfer devices, the tip vessel (2) in the tip vessel element (1) or the tip vessels (2), which are parallel to each other, e.g., in a row or matrix form, in the tip vessel element (1) being supported by a support and fastening plate (3) and the tip vessel or tip vessels (2) and the support and fastening plate (3) being made as one piece preferably out of a plastics material by extrusion, c h a r a c t e r i z e d  in that on the inside face of the wall (4) of each tip vessel (2) of the tip vessel element (1) there is, facing towards the interior of the tip vessel (2), at least one such annular projection, flange or bulging (5), projecting from the said wall face and made of one piece with the tip vessel element (1), as, when the tip vessel element (1) is attached to the liquid transfer device, forms a sealing point around the piston (6) jointly operative with the tip vessel (2) concerned and that at least a space required by the stroke length of the piston remains in each tip vessel (2) underneath the sealing point.

2. A tip vessel element as claimed in claim 1, c h a r a c t e r i z e d  in that in each tip vessel (2) the sealing point (5) is placed right in the upper part of the tip vessel (2).

3. A tip vessel element as claimed in claims 1 and 2, c h a r a c t e r i z e d  in that the upper part (7) of each tip vessel (2) extends at least the length required by the sealing point (5) above the upper face of the support and fastening plate (3).

Fig.1.

0034438

European Patent
Office

**EUROPEAN SEARCH REPORT**

Application number

EP 81 30 0453

# DOCUMENTS CONSIDERED TO BE RELEVANT

| Category | Citation of document with indication, where appropriate, of relevant passages | Relevant to claim |
|---|---|---|
| X | FR - A - 2 220 282 (LABORATOIRES SANDOZ) <br> * Claims 2,3; page 2, lines 13-21 * | 1,2 |
| | FR - A - 2 432 161 (MARTEAU D'AUTRY) <br> * Figure 2; page 2, lines 17-29 * | 1,2 |
| | DE - A - 2 800 771 (HETTICH) <br> * Page 18, lines 5-24; page 19, line 18 - page 20, line 11 * | 1 |
| A | US - A - 4 187 724 (CITRIN) | 1 |

**CLASSIFICATION OF THE APPLICATION (Int. Cl.³)**

B 01 L 3/02

**TECHNICAL FIELDS SEARCHED (Int. Cl.³)**

B 01 L  3/02
A 61 M  5/315
B 65 D 83/00
       35/30
F 04 B 39/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-05-1981 | LAMMINEUR |

EPO Form 1503.1  06.78